# EUROPEAN PATENT SPECIFICATION

(11) **EP 0 828 339 B1**
(45) Date of publication and mention of the grant of the patent: **14.11.2001**
(21) Application number: 97115178.2
(22) Date of filing: 02.09.1997
(51) Int. Cl.: H02K 49/04

(54) **Permanent magnet type eddy current reduction apparatus**
Dauermagnet Wirbelstrom Bremsgerät
Appareil de réduction à courant de Foucault de type à aimants permanents

(30) Priority: 06.09.1996 JP 25752196
(43) Date of publication of application: 11.03.1998
(73) Proprietor: Isuzu Motors Limited, Tokyo 140-8524 (JP)
(72) Inventor: Kuwahara, Tohru, c/o Isuza Motors Limited, Kawasaki-shi, Kanagawa-ken (JP)
(74) Representative: Niedmers, Ole, Dipl.-Phys.

(56) References cited:
- EP-A- 0 456 017
- EP-A- 0 469 496
- PATENT ABSTRACTS OF JAPAN vol. 017, no. 608 (E-1457), 9 November 1993 & JP 05 184128 A (ISUZU MOTORS LTD), 23 July 1993,

## Description

The present invention relates to a permanent magnet type eddy current reduction apparatus as an auxiliary brake device for vehicles, and more specifically, to a permanent magnet type eddy current reduction apparatus capable of holding a magnet support tube in a partial braking position.

PATENT ABSTRACTS OF JAPAN vol. 017, no. 608 (E-1457), 9 November 1993 & JP 05 184128 A (ISUZU MOTORS LTD), 23 July 1993, describes a permanent magnet eddy current reduction apparatus comprising an immovable guide tube formed of a nonmagnetic material carrying several ferromagnetic plates disposed at equal intervals in a circumferential direction. The guide tube is arranged in the interior of a brake drum.

Two rows of magnets are arranged on two separate rings that are independently rotatable by means of actuators. A third row of magnets is arranged on a third fixed ring. Magnets facing the ferromagnetic plates are so coupled to the outer peripheral surfaces of the rings that the polarities are circumferentially alternately different.

In the permanent magnet type eddy current reduction apparatus disclosed in Japanese Patent Laid-Open No. Hei 4-88,867 and the like, a number of permanent magnets (hereinafter merely referred to as magnets) are juxtaposed on the outer peripheral surface of a single magnet support tube which is arranged interiorly of a rotating brake drum so that polarities are N, N, S, S, ··· in a peripheral direction, and a guide tube having a number of ferromagnetic plates (pole pieces) is arranged between the brake drum and the magnets. When a pair of magnets different in polarity are opposed to the inner surface of a common ferromagnetic plate by rotation of the magnetic support tube, a magnetic field from the magnets is interrupted inside the ferromagnetic plate and does not arrive at the brake drum, assuming a non-braking state. Conversely, when a pair of magnets having the same polarity are opposed to the inner surface of a common ferromagnetic plate, the magnetic field from the magnets passes through the ferromagnetic plate and arrives at the brake drum, assuming a brake state in which an eddy current flows into the rotating brake drum. An intermediate braking force may be obtained by holding a magnetic support tube in an intermediate position between a brake position and *a* non-braking position by an air pressure actuator.

In the aforementioned eddy currant reduction apparatus, even if a diameter of the brake drum is not made larger, an axial dimension can be lengthened whereby the braking force can be increased. It is therefore advantageous in the case where a mounting space of the eddy currant reduction apparatus has an axial allowable space. However, the axial dimension of the entire magnet support tuba becomes longer and a great driving force is necessary for driving the entire magnet support tube to obtain the brake, partial braking and non-braking. Therefore, the dimension and capacity of the air pressure actuator increase, the mounting property relative to the vehicle is poor, a consumption quantity of pressure air increases, and the number or dimension of magnets arranged in a peripheral direction on the magnet support tube reduce.

The eddy ourrent reduction apparatus disclosed in Japanese Patent Laid-Open No. Hei 4-12,659 oan be advantageously coped with the aforementioned problems. However, a diametral space of the brake drum is limited, and if an attempt is made to lengthen the axial dimension of the magnets to secure a greater braking force, the ferromagnetic plate has to be increased in thickness in order to confine an axial short-circuiting magnetic circuit at the time of non-braking in the ferromagnetic plates and to prevent a leakage of magnetism to the brake drum.

In view of the aforementioned problem, an object of the present invention is to provide a permanent magnet type eddy current reduction apparatus in which even if ferromagnetic plates are relatively thin, a leakage of magnetism at the time of non-braking can be confined, and one of magnet support tubes is rotated by a small actuator to thereby secure an intermediate braking force.

For solving the aforesaid problem, according to the present invention, there is provided an apparatus having an immovable guide tube formed of a non-magnetic body and having an annular hollow portion of a rectangular section is arranged interiorly of a brake drum which is formed of a conductor and connected to a rotational shaft, a number of ferromagnetic plates are connected to an outer tube portion of said guide tuba at equal intervals in a peripheral direction, a first and a second magnetic support tubes formed of magnetic body and arranged axially are rotatably supported in the hollow portion of said guide tube, permanent magnets twice in number of said ferromagnetic plates are connected to outer peripheral surfaces of said first and second magnet support tubes so that polarities opposed to said ferromagnetic plates are different two by two in a peripheral direction, and actuators for separately rotating said first and second magnet support tubes by a half arranging pitch of said ferromagnetic plates are provided in a full braking position in which polarities of the permanent magnets of said first and second magnet support tubes with respect to said ferromagnetic plates are the same, a non-braking position in which polarities of two permanent magnets of the magnet support tubes With respect to the ferromagnetic plates are different from each other, and a partial braking position in which polarities of two permanent magnets of the first magnet support tube with respect to the ferromagnetic plates are different from each other and polarities of two permanent magnets of the second magnet support tube are the same.

According to the present invention, the first and second actuators are connected to the first and second magnet support tubes, respectively and normally, two magnets adjacent to the peripheral direction of the first and second magnet support tubes opposed to each ferromagnetic plates are different in polarity from each other, that is, in the non-braking position. When the second magnet support tube (supporting a large magnet) is normally rotated by a half arranging pitch of the ferromagnetic plate by the second actuator, it assumes a partial braking position in a relation in which three out of four magnets opposed to each ferromagnetic plate are the same polarity and one is different polarity. Then, when the first magnet support tube is normally rotated by a half arranging pitch of the ferromagnetic plates by the first actuator, four magnets opposed to each ferromagnetic plate are the same polarity, that is, in a full braking position.

When the first magnet support tube is reversely rotated from the full braking position by the first actuator, the position returns to the partial braking position, and when the second magnet support tube is reversely rotated by the second actuator, the position returns to the non-braking position.

These and other objects and features of the invention will become more apparent upon a perusal of the following description taken in conjunction with the accompanying drawings wherein:
FIG. 1 is an elevational sectional view of a permanent magnet type eddy current reduction apparatus according to the present invention.
FIG. 2 is a left side sectional view showing a braking position of the permanent magnet type eddy current reduction apparatus according to the present invention.
FIG. 3 is a left side sectional view showing a non-braking position of the eddy currant reduction apparatus.
FIG. 4 is a developed plan view showing a non-braking position of a magnet support tube in the eddy current reduction apparatus.
FIG. 5 is a developed plan view showing a partial braking position of a magnet support tube in the eddy current reduction apparatus.
FIG. 6 is a developed plan view showing a full braking position of a magnet support tube in the eddy current reduction apparatus.

### DESCRIPTION OF THE PREFERRED EMBODIMENTS

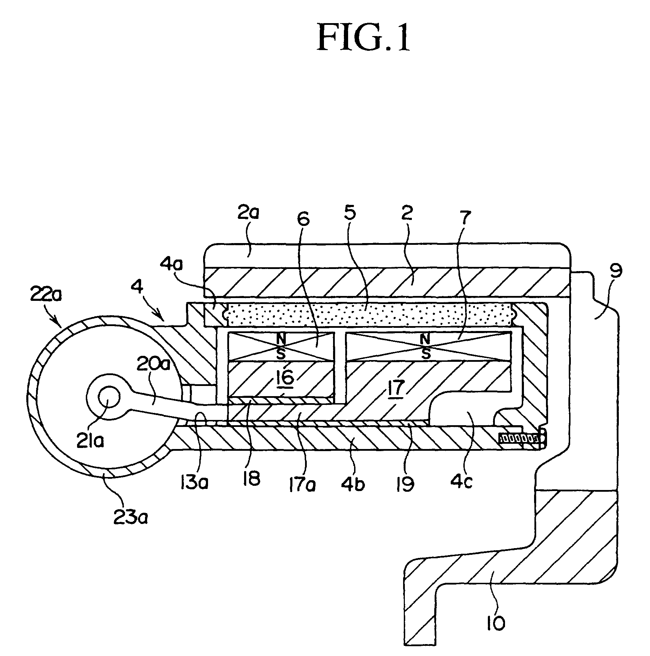

As shown in FIG. 1, the permanent magnet type eddy current reduction apparatus comprises a brake drum 2 formed of a conductor and connected to a rotational shaft not shown, for example, an output shaft of a transmission, an immovable guide tube 4 having an annular hollow portion 4c of a rectangular section and arranged interiorly of the brake drum 2, and a first and a second magnet support tubes 16 and 17 axially arranged and rotatably supported in the hollow portion 4c of the guide tube 4. The brake drum 2 is opened its extreme end (left and in FIG. 1) and connected its base end to a number of spokes 9 extending radially from a boss portion 10. The boss portion 10 is connected to the rotational shaft.

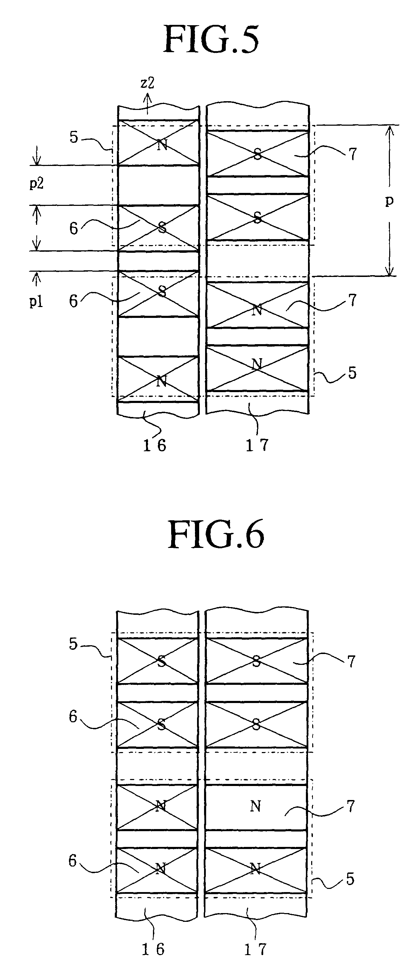

The guide tube 4 formed from a non-magnetic body or non-magnetic material is constituted by connecting end walls formed from annular plates, to, for example, loft and right ends of an outer tube portion 4a and an inner tube portion 4b by a plurality of bolts. A number of ferromagnetic plates (pole pieces) 5 are connected to the outer tube portion 4a at equal intervals in the peripheral direction. Magnets 6 and 7 twice in number of the ferromagnetic plates 5 are connected to outer peripheral surfaces of first and second magnet support tubes 16 and 17 formed from magnetic body so that polarities opposed to the ferromagnetic plates 5 are different two by two in the peripheral direction. Preferably, a mutual gap p1 (FIG. 5) between the magnets 6 of the same polarity arranged in the peripheral direction of the first magnet support tube 16 is made narrower than a mutual gap p2 between the magnets 6 of different polarities. Similarly, a mutual gap p1 between the magnets 7 of the same polarity arranged in the peripheral direction of the second magnet support tube 17 is made narrower than a mutual gap p2 between the magnets 7 of different polarities.

In the illustrated embodiment, the magnet support tube 17 is provided with a thin cylindrical portion 17a integral therewith and rotably fitted over the inner tube portion 4b of the guide tube 4 though a bushing 19, and the magnet support tube 16 is fitted over the thin cylindrical portion 17a through a bushing 18. The magnet support tubes 16 and 17 have substantially the same construction but the magnet support tube 17 and the magnet 7 are longer in axial dimension than the magnet support tube 16 and the magnet 6 and are disposed in the inner deep portion (base end side) of the brake drum 2.

When the brake torque in the partial braking position of the magnet support tubes 16 and 17 is 1/2 of the brake torque in the full braking position, the rate in axial dimension between the magnet support tubes 16 and 17 and the magnets 6 and 7 is approximately 4 : 6. More specifically, since the broke torque of the magnet support tubes 16 and 17 is proportional to 1.3 to 1.5 square of the axial dimension, the rate of axial dimension between the magnets 6 and 7 will suffice to be approximately 42, 58 to 37 : 63.

The magnet support tube 17 having a long axial dimension is disposed in the inner deep portion (base end side) of the brake drum 2 and the magnet support tube 16 having a short axial dimension is disposed in the open end portion (extreme end side) of the brake drum 2 for the following reasons. The magnet support tube 17 having a long axial dimension is rotated and switched to generate the partial braking torque. This is because the temperature distribution of the brake drum 2 is caused to be more uniform. When an eddy current is generated in the vicinity of the open end of the brake drum 2, heat distribution is one-sided at the open end of the brake drum 2 so that the temperature of the brake drum 2 is uneven and the brake drum 2 tends to be thermally deformed. When an eddy current is generated at the inner deep portion of the brake drum 2, heat of the brake drum 2 escapes towards the spokes 9 and heat distribution of the brake drum 2 tends to be uniform.

According to the present invention, the first and second magnet support tubes 16 and 17 are independently normally or reversely rotated by a half arranging pitch (p/2) of the ferromagnetic plate 5 by first and second actuators 22 and 22a to a non-braking position in which polarities of two magnets 6 with respect to the ferromagnetic plates 5 are different from each other and polarities of two magnets 7 are different from each other, a full braking position in which polarities of magnets 6 and 7 (four magnets in all) with respect to the ferromagnetic plates 5 are the same, and a partial braking position in which polarities of two magnets 6 with respect to the ferromagnetic plates 5 are different from each other and polarities of two magnets 7 are the same.

In the embodiment shown in FIG. 1, an arm 20a projecting from the thin cylindrical portion 17a of the second magnet support tuba 17 to outside via a slit 13a of the end wall of the guide tube 4 is connected to a rod 21a of the second actuator 22a. Similarly, an arm 20 projecting from the first magnet support tube 16 to outside via the slit of the end wall of the guide tube 4 is connected to a rod 21 of the first actuator 22.

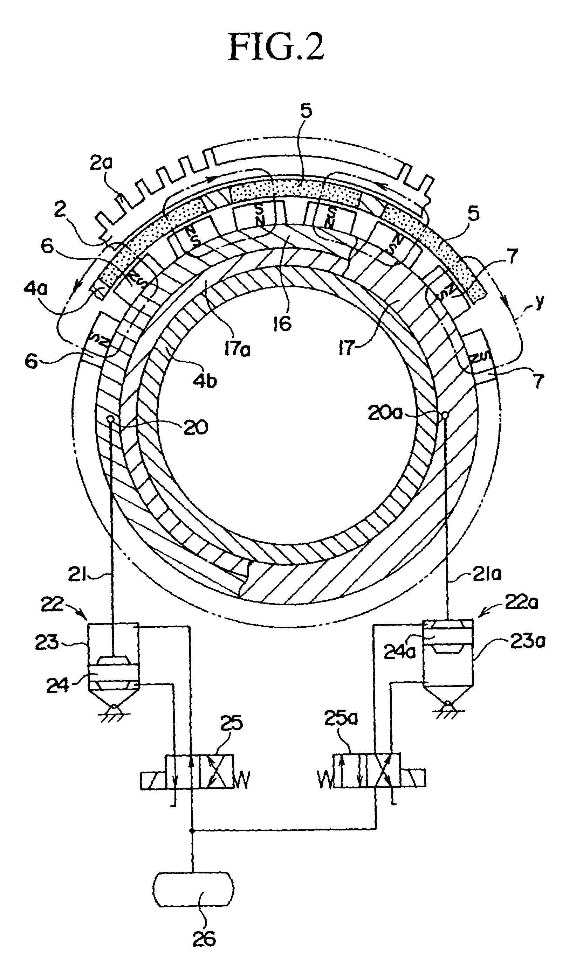

As shown in FIG. 2, the first actuator 22 has a piston 24 fitted in a cylinder 23, and the rod 21 extended from the piston 24 is connected to the end wall of the first magnet support tube 16 by the arm 20. The second actuator 22a has a piston 24a fitted in a cylinder 23a, and the rod 21a extended from the piston 24a is connected to the end wall of the second magnet support tube 17 by the arm 20a.

Alternatively, the magnet support tubes 16 and 17 are separately rotatably supported directly on the inner tube portion 4b by bushings, and the arm 20a is projected from the end wall of the magnet support tube 17 to outside via a slit in the magnet support tube 16 and a slit 13a of the end wall of the guide tube 4 and is connected to the rod 21a of the second actuator 22a.

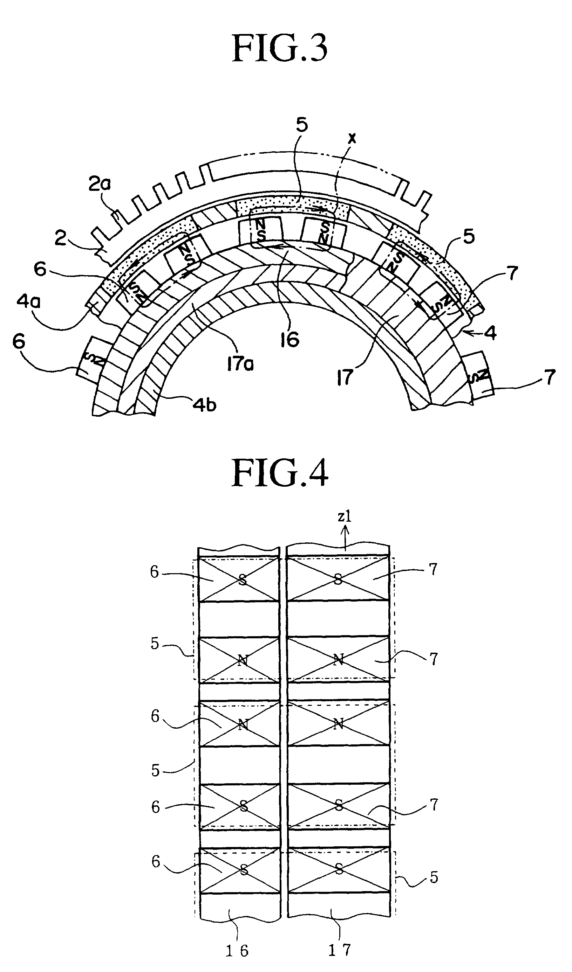

Next, the operation of the permanent magnet type eddy current reduction apparatus according to the present invention will be explained. In the non-braking position of the eddy current reduction apparatus shown in FIGS. 3 and 4, electromagnetic switching valves 25, 25a are deenergized, and pressure air of an air tank 26 is supplied to a lower and chamber of the actuator 22 via the electromagnetic switching valve 25, and an upper end chamber is opened to the atmosphere via the electromagnetic switching valve 25. Further, pressure air of an air tank 26 is supplied to an upper end chamber of the actuator 22a via the electromagnetic switching valve 25a, and a lower end chamber is opened to the atmosphere via the electromagnetic switching valve 25a. In the non-braking position, as shown in FIG. 4, polarities of the magnets 6 and 7 opposed to each ferromagnetic plates 5 and arranged axially are the same, polarities of two magnets 6 arranged in a peripheral direction are different from each other and polarities of two magnets 7 arranged in a peripheral direction are different from each other. As shown in FIG. 3, short-circuiting magnetic circuits x are formed between the ferromagnetic plates 5 and the magnet support tubes 16 and 17 in a plane perpendicular to the center axis of the brake drum 2, and the magnets 6 and 7 do not extend the magnetic field to the brake drum 2.

The magnet support tube 17 is rotated from the non-braking position shown in FIG. 4 to the partial braking position shown in FIG. 5 in the following manner. When the electromagnetic switching valve 25a is excited, pressure air is supplied to the lower end chamber of the actuator 22a. The magnet support tube 17 is rotated by a half arranging pitch p/2 of each ferromagnetic plate 5 in a direction indicated by arrow z1 of FIG. 4. At this time, the polarity of one magnet 6 opposed to the ferromagnetic plate 5 is the same as the polarities of two magnate 7, and the polarity of the other magnet 6 is different from others. In the partial braking position, magnetic fluxes arriving at the inner peripheral surface of the brake drum 2 via the ferromagnetio plates 5 from the magnets 6 and 7 are about half of those in the full braking position.

The magnet support tube 16 is rotated from the partial braking position shown in FIG. 5 to the full braking position shown in FIGS. 2 and 6 in the following manner. When the electromagnetic switching valves 25 is excited, pressure air is supplied to the upper end chamber of the actuator 22, and the magnet support tube 16 is rotated by a half arranging pitch p/2 of the ferromagnetic plate S in a direction as indicated by arrow z2 in FIG. 5 by the rod 21. Polarities of all the magnets 6 and 7 opposed to each ferrormagnetic plates 5 are the same, the magnets 6 and 7 extend the magnetic field to the inner peripheral surface of the brake drum 2 via the ferromagnetic plates 5 and extend the maximum brake torque caused by the eddy current to the brake drum 2. At this time, as shown in FIG. 2. magnetic circuits y are formed between the brake drum 2 and the magnet support tubes 16 and 17 in a plane perpendicular to the center axis of the brake drum 2.

Next, switching from the full braking position shown in FIG. 6 to the partial braking position shown in FIG. 5 is carried Out in the following manner. When the electromagnetic switching valve 25 is deenergized, pressure air is supplied to the lower end chamber of the actuator 22, and the magnet support tube 16 is returned to the partial braking position shown in FIG. 5.

Switching from the partial braking position shown in FIG. 5 to the non-braking position shown in FIG. 4 is carried out in the following manner. When the electromagnetic switching valve 25a is also deenergized, pressure air is supplied to the upper end chamber of the actuator 22a, and the magnet support tube 17 is returned to the non-braking position shown in FIGS. 3 and 4.

In the aforementioned embodiments, by use of the first and second actuators, a spring for returning to the non-braking position is not necessary. Therefore, in rospeot of this, it is possible to shorten the overall length of the actuator and to reduce material cost and assembling cost,

While in the above-described embodiments, pressure air is supplied to the upper and lower end chambers of the actuators or pressure air is discharged from the upper and lower end chambers, it is to be noted that a return spring is provided in one end chamber and pressure air is supplied to other end chamber, or pressure air is discharged from the other end chamber to thereby reciprocate the actuators.

As described above, according to the present invention, a first and a second magnetic support tubes formed of magnetic body and arranged axially are rotatably supported in the hollow portion of said guide tube, permanent magnet twice in number of said ferromagnetic plates are connected to outer peripheral surfaces of said first and second magnet support tubes so that polarities opposed to said ferromagnetic plates are different two by two in a peripheral direction. Therefore, there are obtained following effects:

Even if the ferromagnetic plates are relatively thin, a leakage of magnetism at the time of non-braking can be confined, and the braking force can be secured by a small actuator.

The stroke or the full length of the actuators can shortened about half of prior art, the weight can be reduced, and the consumption quantity of pressure fluid for driving the actuators can be saved.

Pressure fluid is merely selectively supplied to the end chambers of the actuators by two electromagnetic switching valves whereby the magnet support tubes can be rotated stepwise from the non-braking position to the partial braking position and the full braking position. Therefore, if, for example, the intermediate braking force is successively effected by the eddy current reduction apparatus on a long downward slope, it is possible to secure the safety of running.

Obviously, many modifications and variations of the present invention are possible in right of the above teachings. It is to be understood, therefore, that the invention can be practiced otherwise than as specifically described.
- 2:: brake drum
- 2a:: cooling fin
- 4 :: guide tube
- 4a:: outer tube portion
- 4b:: inner tube portion
- 4c:: hollow portion
- 5:: ferromagnetic plate
- 6, 7:: magnet
- 9 :: spoke
- 10:: boss portion
- 13a:: slit
- 16, 17:: first and second magnet support tube
- 17a:: thin cylindrical portion
- 18, 19:: bushing
- 20, 20a:: arm
- 21, 21a:: rod
- 22, 22a:: first and second actuator
- 23, 23a:: cylinder
- 24, 24a:: piston
- 25, 25a:: electromagnetio switching valve
- 26:: air tank.

## Claims

1. A permanent magnet type eddy current reduction apparatus having an immovable guide tube (4) formed of a non-magnetic body and having an annular hollow portion (4c) of a rectangular section is arranged interiorly of a brake drum (2) which is formed of a conductor and connected to a rotational shaft, a number of ferromagnetic plates (5) are connected to an outer tube portion of said guide tube (4) at equal intervals in a peripheral direction, a first and a second magnetic support tubes (16, 17) formed of magnetic body and arranged axially are rotatably supported in the hollow portion (4c) of said guide tube (4), permanent magnets (6, 7) twice in number of said ferromagnetic plates (5) are connected to outer peripheral surfaces of said first and second magnet support tubes (16, 17) so that polarities opposed to said ferromagnetic plates (5) are different two by two in a peripheral direction, and actuators (22, 22a) for separately rotating said first and second magnet support tubes (16, 17) by a half arranging pitch (P) of said ferromagnetic plates are provided in a full braking position in which polarities of the permanent magnets (6, 7) of said first and second magnet support tubes (16, 17) with respect to said ferromagnetic plates (5) are the same, a non-braking position in which polarities of two permanent magnets (6, 7) of the magnet support tubes (16, 17) with respect to the ferromagnetic plates (5) are different from each other, and a partial braking position in which polarities of two permanent magnets (6, 7) of the first magnet support tube (16) with respect to the ferromagnetic plates (5) are different from each other and polarities of two permanent magnets (7) of the second magnet support tube (17) are the same.

2. The permanent magnet type eddy current reduction apparatus according to claim 1, wherein the permanent magnet (6) of the first magnet support tube (16) is shorter in axial dimension than the permanent magnet (7) of the second magnet support tube (17).

3. The permanent magnet type eddy current reduction apparatus according to claim 1, wherein said brake drum (2) has its base end connected to a boss portion (10) of said rotational shaft by spokes (9), the first magnet support tube (16) is disposed on the extreme end aide of said brake drum (2), and the second magnet support tube (17) is disposed on the base end side of said brake drum (2).

## Patentansprüche

1. Dauermagnet Wirbelstrombremsgerät, umfassend ein nichtbewegliches Führungsrohr(4), das aus einem nichtmagnetischen Körper ausgebildet ist und einen kreisförmigen, hohlen Abschnitt (4c) mit rechteckigem Querschnitt, der im Inneren einer Bremstrommel (2) angeordnet ist, die als Leiter ausgebildet ist, aufweist, eine Mehrzahl ferromagnetischer Platten (5), die mit einem äußeren Rohrteil des Führungsrohrs (4) in gleichen Abständen in Umfangsrichtung verbunden sind, ein erstes und ein zweites Tragrohr (16, 17), die aus einem magnetischen Körper gebildet und axial angeordnet sind und drehbar im hohlen Abschnitt (4c) des Führungsrohrs (4) gehalten wurden, wobei zwei Permanentmagneten (6, 7) der ferromagnetischen Platten (5) mit äußeren Umfangsoberflächen der ersten und zweiten Magnettragrohre (16, 17) verbunden sind, so daß die Polaritäten, die den ferromagnetischen Platten (5) gegenüberliegen, paarweise in Umfangsrichtung unterschiedlich sind, sowie vorgesehene Aktuatoren (22, 22a) für getrenntes Drehen der ersten und zweiten Magnettragerohre (16, 17) entsprechend eines halben Teilungsschrittes (p) in der Anordnung der ferromagnetischen Platten in eine Bremsvollstellung, in der die Polaritäten der Permanentmagneten (6, 7) der ersten und der zweiten Magnettragrohre (16, 17) im Hinblick auf die ferromagnetischen Platten (5) dieselben sind, und in eine Nichtbremsstellung, in der die Polaritäten der Permanentmagneten (6, 7) der Magnettragrohre (16, 17) im Hinblick auf die ferromagnetischen Platten (5) unterschiedlich zueinander sind, und in eine Teilbremsstellung, in der die Polaritäten der beiden Permanentmagneten (6, 7) des ersten Magnettragrohrs (16) im Hinblick auf die ferromagnetischen Platten (5) unterschiedlich voneinander sind und die Polaritäten der beiden Permanentmagneten (7) des zweiten Magnettragrohrs (17) dieselben sind.

2. Dauermagnet Wirbelstrombremsgerät nach Anspruch 1, bei dem der Permanentmagnet (6) des ersten Magnettragrohrs (16) in axialer Dimension kürzer als der Permanentmagnet (7) des zweiten Magnettragrohrs (17) ist.

3. Dauermagnet Wirbelstrombremsgerät nach Anspruch 1, bei dem die Bremstrommel 2) mit ihrem Basisende mit einem Nabenteil (18) der Drehwelle über Speichen (9) verbunden ist, wobei das erste Magnettragrohr (16) auf der vorstehenden Endseite der Bremstrommel (2) angeordnet ist und das zweite Magnettragrohr (17) auf der Basisendseite der zweiten Bremstrommel (2) angeordnet ist.

## Revendications

1. Appareil de réduction à courant de Foucault de type à aimants permanents, comportant un tube guide fixe (4) constitué par un corps non-magnétique, comprenant un partie creuse annulaire (4c) de section rectangulaire, disposé à l'intérieur d'un tambour de frein (2) qui est constitué d'un conducteur et relié à un axe rotatif, une pluralité de plaques ferromagnétiques (5) est reliée à une partie de tube externe du tube guide (4) à intervalles réguliers dans une direction périphérique, des premier et second tubes supports d'aimants (16, 17) constitués de corps magnétique et disposés axialement sont montés tourillonnants dans la partie creuse (4c) du tube guide (4) des aimants permanents (6, 7), en nombre double de celui des plaques ferromagnétiques (5), sont reliés à des surfaces externes périphériques des premier et second tubes supports d'aimants (16, 17) de façon telle que les polarités en regard des plaques ferromagnétiques (5) sont différentes deux par deux en direction périphérique, et il est prévu des actionneurs (22, 22a), pour faire tourner séparément les premier et second tubes supports d'aimants (16, 17) d'un demi-pas de montage des plaques ferromagnétiques, dans une position de freinage total dans laquelle les polarités des aimants permanents (6, 7) des premier et second tubes supports d'aimants (16, 17) par rapport aux plaques ferromagnétiques (5) sont les mêmes, une position de non-freinage dans laquelle les polarités de deux aimants permanents (6, 7) des tubes supports d'aimants (16, 17) par rapport aux plaques ferromagnétiques (5) sont mutuellement différentes, et une position de freinage partiel dans laquelle les polarités de deux aimants permanents (6, 7) du premier tube support (16) par rapport aux plaques ferromagnétiques (5) sont mutuellement différentes et les polarités de deux aimants permanents (7) du second tube support d'aimant (17) sont les mêmes.

2. Appareil de réduction à courant de Foucault de type à aimants permanents selon la revendication 1, dans lequel l'aimant permanent (6) du premier tube support d'aimant (16) présente une dimension axiale moindre que celle de l'aimant permanent (7) du second tube support d'aimant (17).

3. Appareil de réduction à courant de Foucault de type à aimants permanents selon la revendication 1, dans lequel l'extrémité de base du tambour de frein (2) est reliée à un bossage (10) de l'axe tourillonnant par des rayons (9), le premier tube support d'aimant (16) est placé sur le côté d'extrémité de bout du tambour de frein (2) et le second tube de support d'aimant (17) est placé sur le côté d'extrémité de base du tambour de frein (2).
